# EUROPEAN PATENT SPECIFICATION

(11) **EP 4 457 579 B1**
(45) Date of publication and mention of the grant of the patent: **28.10.2026**
(21) Application number: 22787086.2
(22) Date of filing: 20.09.2022
(51) Int. Cl.: G06F 1/16, H04M 1/02

(54) **HINGED DEVICE CONDUCTOR PATHWAY**
SCHARNIERTER VORRICHTUNGSLEITERPFAD
TRAJET DE CONDUCTEUR POUR DISPOSITIF À CHARNIÈRE

(30) Priority: 30.12.2021 US 202117565805
(43) Date of publication of application: 06.11.2024
(73) Proprietor: Microsoft Technology Licensing, LLC, Redmond, WA 98052-6399 (US)
(72) Inventor: PARK, Daniel C., Redmond, Washington 98052-6399 (US)
(74) Representative: Page White Farrer
(86) International application number: PCT/US2022/044049
(87) International publication number: WO 2023/129222

(56) References cited:
- US-A1- 2012 257 368
- US-A1- 2020 033 916
- US-A1- 2021 232 182

## Description

### BACKGROUND

Many computer form factors such as smart phones, tablets, and notebook computers can provide enhanced functionality by folding for storage and opening for use. For instance, the folded device is easier to carry and the opened device offers more input/output area. Foldable devices can include conductors extending between the different foldable parts.

US2020033916A1 discloses a hinged computing device having first and second device portions and a hinge assembly that includes spaced-apart parallel first and second hinge shafts.

US2012257368A1 discloses an extendable connecting link having a first link section which attaches in a first housing part of a device and a second link section which attaches in a second housing part of the device. The first and second link sections interlock and slide-engage relative to each other.

US2021232182A1 discloses a shaft assembly which pivotally couples a first module body to a second module body and which includes two double shaft hinges and a main cover plate.

### SUMMARY

The invention is defined by the appended independent claim.

This patent relates to hinged devices, such as hinged computing devices. One example can include a first portion including a first electronic component and a second portion including a second electronic component. A hinge assembly can rotatably secure the first and second portions through a range of rotation from a closed orientation to an open orientation. A dumbbell-shaped shield assembly can be configured to provide an orientation-specific protective pathway between the first portion and the second portion for a conductor extending from the first electronic component to the second electronic component.

This example is intended to provide a summary of some of the described concepts and is not intended to be inclusive or limiting.

### BRIEF DESCRIPTION OF THE DRAWINGS

The accompanying drawings illustrate implementations of the concepts conveyed in the present document. Features of the illustrated implementations can be more readily understood by reference to the following description taken in conjunction with the accompanying drawings. Like reference numbers in the various drawings are used wherever feasible to indicate like elements. Further, the left-most numeral of each reference number conveys the figure and associated discussion where the reference number is first introduced. Where space permits, elements and their associated reference numbers are both shown on the drawing page for the reader's convenience. Otherwise, only the reference numbers are shown. Note that some figures illustrate many elements and adding lead lines to all of the elements can diminish readability of the figure. Accordingly, not every element is designated in every figure.
FIGS. 1A-1C, 3A, 4A, and 5A show perspective views of example devices in accordance with some implementations of the present concepts.
FIGS. 3B, 4B, and 5B show exploded perspective views of example devices in accordance with some implementations of the present concepts.
FIGS. 3C, 3D, 4C, 4D, 5C, 5D, and 6 show elevational views of example devices in accordance with some implementations of the present concepts.

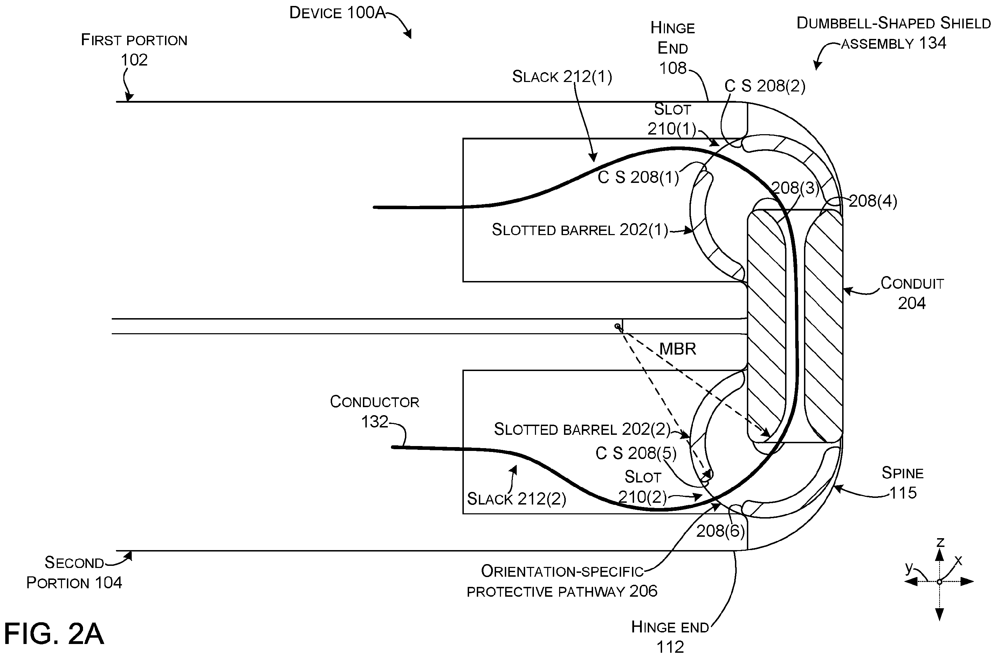

FIGS. 2A-2C, 3E-3G, 4E-4G, and 5E-5G show sectional views of example devices in accordance with some implementations of the present concepts.

### DESCRIPTION

The present concepts relate to devices, such as computing devices that have rotationally secured (e.g., hinged) first and second device portions. Hinge assemblies can provide hinge functionality between the first and second device portions. Conductors are routed between the first and second portions to couple electronic components, such as displays. Some previous configurations routed the conductors through the hinge assemblies, which increased the space occupied by the hinge assemblies and decreased the size of the displays. The present concepts provide a set of rigid components that can move relative to one another and the first and second portions to provide a protective pathway for the conductors between the first and second portions as they rotate through various orientations.

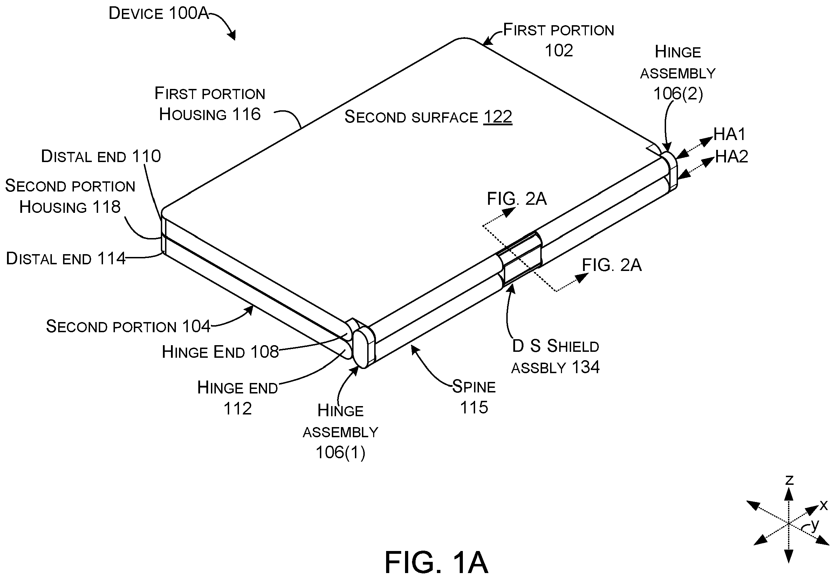

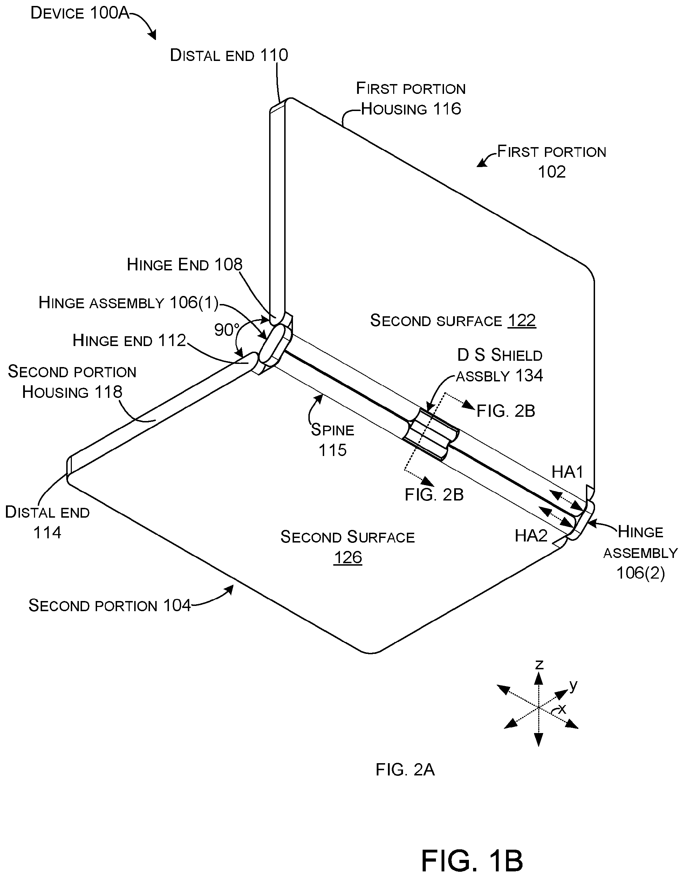

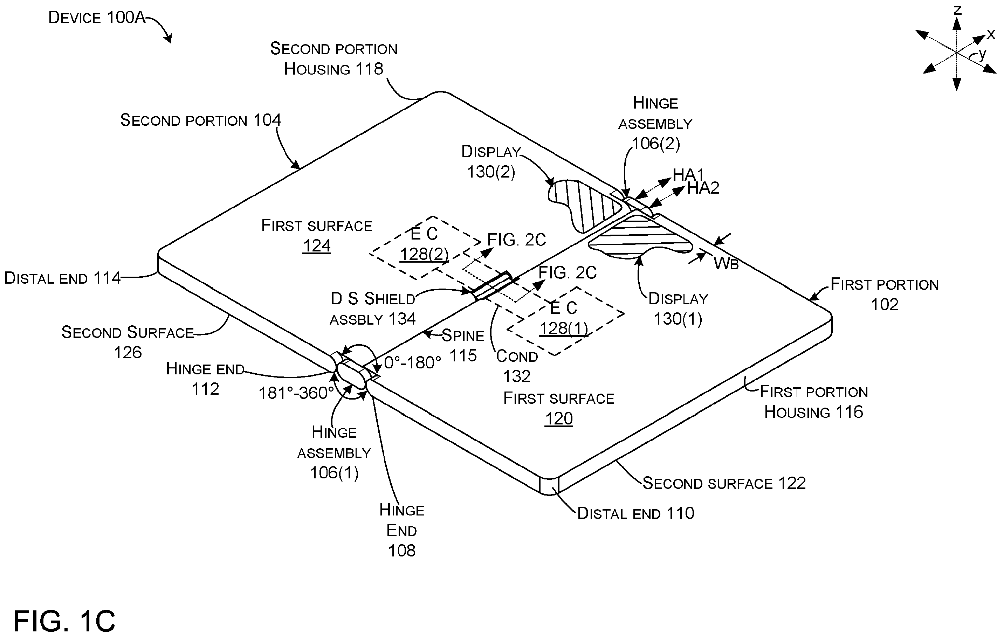

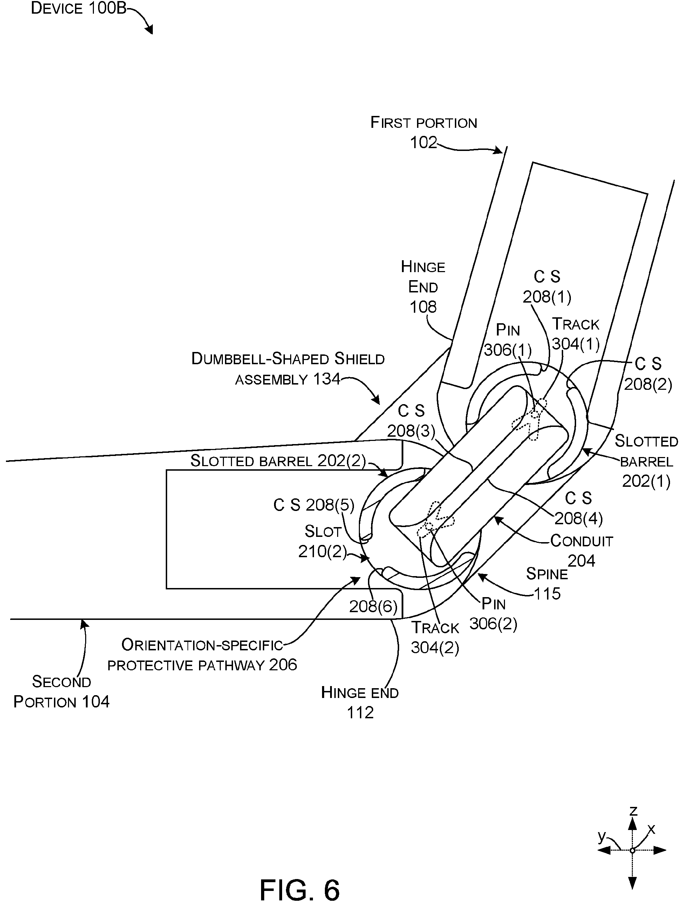

Introductory FIGS. 1A-1C collectively show an example device 100A that has first and second portions 102 and 104 that are rotatably secured together by hinge assemblies 106. (The use of a suffix e.g., 'A' with the designator 100 is intended to indicate that elements of the various described devices, such as device 100B of FIG. 6 may be the same or different). The hinge assemblies 106 can rotatably secure the first and second portions 102 and 104 through a range of rotations, such as from a zero-degree or closed orientation illustrated in FIG. 1A through various angles, such as the 90-degree orientation of FIG. 1B and/or various oblique angles to the 180-degree orientation shown in FIG. 1C. In some implementations, the range of rotations may continue, such as all the way to a 360-degree orientation.

In the illustrated implementation, two hinge assemblies 106(1) and 106(2) are employed at opposing ends of the device, but other implementations could employ different numbers of hinge assemblies and/or locations for the hinge assemblies. The first portion 102 can extend from a hinge end 108 to a distal end 110. The second portion 104 also can extend from a hinge end 112 to a distal end 114. A region of the device defined by hinge end 108, hinge assemblies 106, and hinge end 112 can be termed a 'spine' 115 of the device. In this implementation, the hinge assemblies 106 can define two hinge axes HA. The first portion 102 can rotate around first hinge axis HA1 and the second portion 104 can rotate around second hinge axis HA2. Other implementations can define a single hinge axis or more than two hinge axes.

In some implementations, the hinge assemblies 106 can provide a timing or synchronizing function so that rotation around one hinge axis is accompanied by equivalent rotation around the other hinge axis. For instance, 20 degrees of rotation of the first portion 102 around hinge axis one (HA1) would be accompanied by a simultaneous and equivalent 20 degrees of rotation of the second portion around hinge axis two (HA2). Other hinge assemblies may not provide a synchronizing function. The present concepts can accommodate either synchronized or non-synchronized rotation.

In some cases, the device can include a housing (designated as first portion housing 116 and second portion housing 118). The first portion housing 116 can define opposing first and second major surfaces 120 and 122 (hereinafter, first and second surfaces). Similarly, the second portion housing 118 can define opposing first and second major surfaces 124 and 126 (hereinafter, first and second surfaces).

In some implementations, the device 100A can include electronic components 128 (FIG. 1C) that can be positioned on the first and second portions 102 and 104, such as in/on the first portion housing 116 and/or the second portion housing 118. Example electronic components 128 (FIG. 1C) are shown in ghost below the first surfaces 120 and 124. Example electronic components can include processors, memory, storage, batteries, etc. Other example electronic components 128 can include displays 130. The displays 130 can be positioned on the first and/or second surfaces 120, 122, 124, and/or 126, respectively. In the illustrated configuration, the displays 130 are positioned on first surfaces 120 and 124, respectively.

Electronic components 128(1) and 128(2) positioned on the first and second portions, respectively, can be electrically coupled by conductors 132. A dumbbell-shaped shield assembly 134 can be configured to provide an orientation-specific protective pathway (FIGS. 2A-2C) for the conductor 132 between the first portion 102 and the second portion 104.

Note that in this illustrated configuration, dumbbell-shaped shield assembly 134 is separate from the hinge assemblies 106 (e.g., is not part of the hinge assemblies). The hinge assemblies 106 may be too thick for the displays 130 to be positioned over them. However, the dumbbell-shaped shield assembly 134 can be thinner than the hinge assemblies and can be configured to allow the displays to be positioned over it. This configuration can allow the hinge assemblies 106 to be thinner in the x reference direction so that the displays 130 can cover a higher percentage of the first surfaces 120 and 124 (e.g., the bezel width WB is reduced). The dumbbell-shaped shield assemblies 134 do not interfere with the displays 130 and so overall display real estate can be increased by employing dedicated hinge assemblies 106 for controlling rotation of the first and second portions and a dedicated dumbbell-shaped shield assembly 134 for protecting conductors traversing the spine 115.

In the illustrated configuration, the dumbbell-shaped shield assembly 134 is centrally located on the device so that the conductors 132 do not have to extend up from the electronic components 128 to the hinge assemblies 106 and back down to the electronic components 128 on the other portion and instead experience basically a straight path through the spine 115. This 'straight path' configuration afforded by the dumbbell-shaped shield assembly 134 can allow conductor types that are not suitable when the conductors experience sharp bends though the hinge assembly. For instance, the present implementations can employ flexible printed circuits (FPCs) or ribbon cable that travel through the dumbbell-shaped shield assembly 134. FPCs or ribbon cable can be employed without risk of failure because of the protection offered by the dumbbell-shaped shield assembly 134 as well as the minimum bend radius (shown FIG. 2A) experienced by the FPC that is defined by the dumbbell-shaped shield assembly 134.

In the illustrated configuration, the dumbbell-shaped shield assembly 134 is centrally located and occupies a subset of the distance between the hinge assemblies 106. In other configurations, the dumbbell-shaped shield assembly 134 can extend along nearly an entirety of the distance (along the hinge axes (e.g., along the x reference axis)) between the hinge assemblies 106. For instance, the dumbbell-shaped shield assembly 134 can extend the entirety of the distance except for about 1 millimeter at each end where the dumbbell-shaped shield assembly 134 connects to the housings 116 and 118 proximate to the hinge assemblies 106.

This latter configuration where the dumbbell-shaped shield assembly 134 extends almost entirely between the hinge assemblies 106 can create a more uniform appearance at the spine 115 and more thoroughly protect against foreign material entering the device and/or interfering with rotation. Thus, the dumbbell-shaped shield assembly 134 can also eliminate the need for a 'dust cover' or other cover over the spine. In such a configuration, the dumbbell-shaped shield assembly 134 provides a technical solution of providing protection to the conductor as well as the overall device while also eliminating the need for a separate cover over the spine. The technical solution is achieved with a combination of rigid components in the form of a dumbbell-shaped shield assembly, which can protect the conductor by totally encapsulating the conductor through the spine without any of the components flexing during rotation. Totally encapsulating can mean that the conductor is not visible at the spine and/or exposed to foreign matter or other device components as it travels through the spine at all orientations of the range of rotations.

FIGS. 2A-2C collectively show dumbbell-shaped shield assembly 134 at the zero, 90, and 180-degree orientations, respectively. The dumbbell-shaped shield assembly 134 can protect the conductors 132 extending from the electronic components (128(1), FIG. 1C) on the first portion 102 to the electronic components (128(2), FIG. 1C) on second portion 104 when the first and second portions are rotated through a range of orientations.

In this example, the dumbbell-shaped shield assembly 134 includes rigid bodies in the form of slotted barrels 202 and conduit 204. In this case, the slotted barrels 202 are positioned on opposite ends of conduit 204. Slotted barrel 202(1) is associated with the first portion 102 and slotted barrel 202(2) is associated with the second portion 104. The slotted barrels 202 and the conduit 204 can collectively define an orientation-specific protective pathway 206 across the spine 115 for conductor(s) 132 extending from the electronic components 128 on one portion to electronic components 128 on the other portion. The orientation-specific protective pathway 206 can protect the conductor 132 from exposure to external damage at the spine 115. Stated another way, the orientation-specific protective pathway 206 can prevent the conductor 132 from being exposed at the hinge ends 108 and 112, at any orientation during the range of rotation.

The orientation-specific protective pathway 206 can also define (e.g., limit) a minimum bend radius (MBR, FIG. 2A) that the conductor 132 experiences during the range of rotation. By defining the minimum bend radius, the orientation-specific protective pathway 206 reduces any chance of the conductor 132 being degraded from bending too sharply. Toward this end, the orientation-specific protective pathway 206 can be defined by (e.g., bounded by) contact surfaces (e.g., bumpers) 208 that contribute to the orientation-specific protective pathway. In this configuration contact surfaces 208(1) and 208(2) are defined by slotted barrel 202(1) and define slot 210(1), therebetween. Contact surfaces 208(3) and 208(4) are defined by conduit 204. Contact surfaces 208(5) and 208(6) are defined by slotted barrel 202(2) and define slot 210(2), therebetween.

Other configurations of the dumbbell-shaped shield assembly 134 may have different numbers and/or arrangements of components and/or contact surfaces 208. The shape of the orientation-specific protective pathway 206 defined by the contact surfaces 208 can change based upon the orientation of the first and second portions 102 and 104. Stated another way, the orientation-specific protective pathway 206 can be orientation-specific to provide multiple types of protection depending on the orientation of the first and second portions 102 and 104. Thus, this implementation provides a technical solution that employs multiple rigid bodies/components to completely protect the conductor 132 at the spine 115 through the entire range of rotation and the multiple rigid components (e.g., the slotted barrels 202 and the conduit 204) can move relative to one another and the first and second portions to collectively define the orientation-specific protective pathway 206 for the conductor 132.

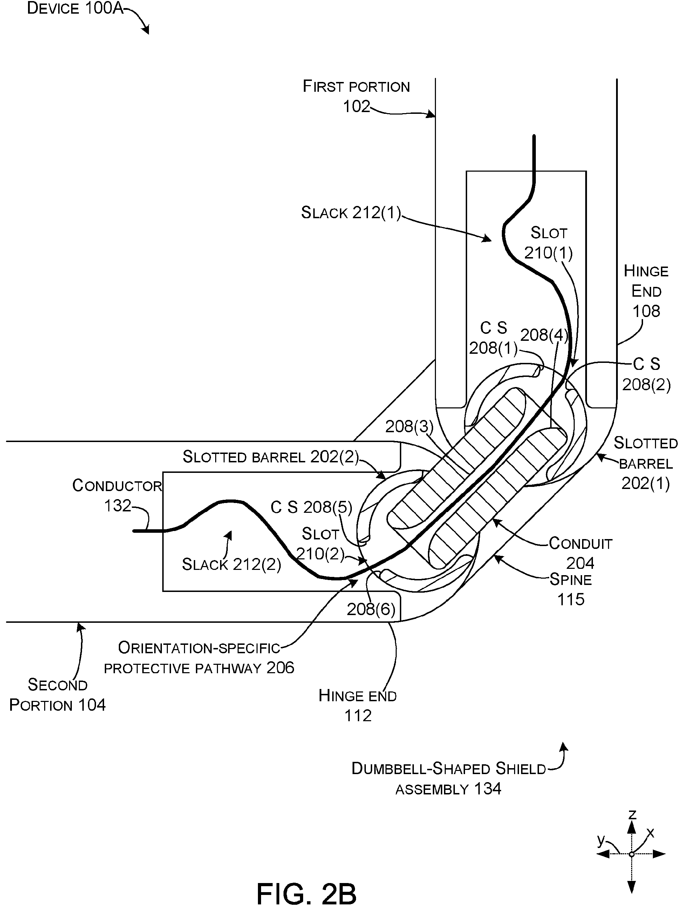

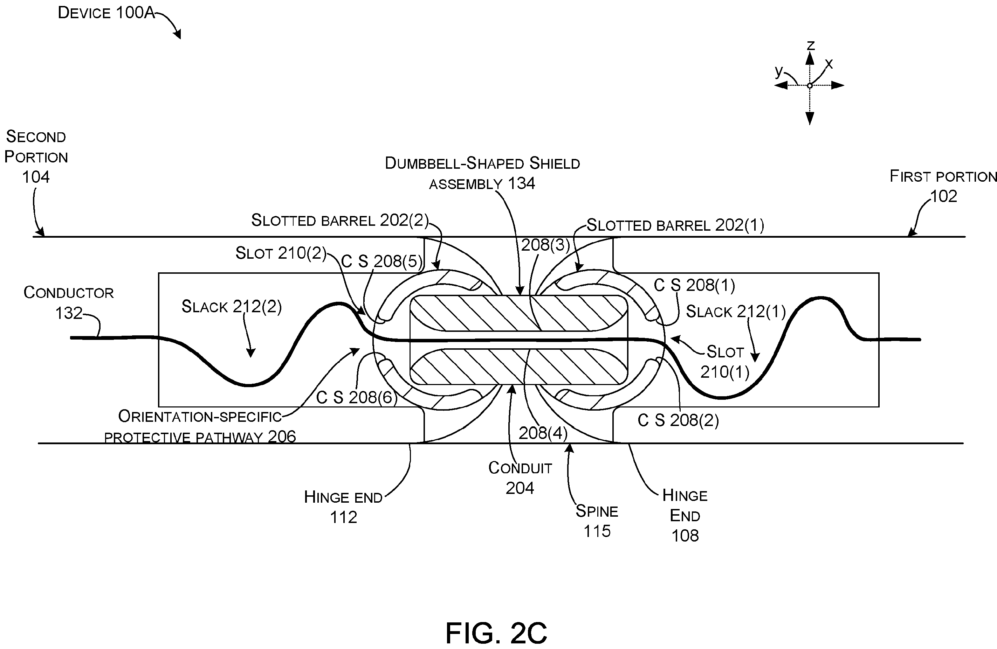

In the zero-degree, 90-degree, and 180-degree orientations of FIGS. 2A-2C, respectively, the minimum bend radius (MBR) experienced by the conductor 132 is at the zero-degree orientation. Contact surfaces 208(1), 208(3), and 208(5) of both the slotted barrels 202 and the conduit 204 contribute to defining the minimum bend radius experienced by the conductor 132. Note also that the length of the orientation-specific protective pathway 206 can change depending upon the orientation of the first and second portions 102 and 104. In this case, the orientation-specific protective pathway 206 experienced by the conductor 132 is longest in the zero-degree orientation as represented by little or no slack 212 is present in the conductor 132. In the 90-degree orientation of FIG. 2B, the orientation-specific protective pathway 206 experienced by the conductor 132 is relatively shorter and hence more slack 212 is present in the conductor 132. In the 180-degree orientation of FIG. 2C, the orientation-specific protective pathway 206 experienced by the conductor 132 is even shorter as reflected by still more slack 212 present in the conductor 132. Thus, this implementation can provide a technical solution that provides a longer, gradually bending protective path for the conductor at high bend angles (e.g., the closed orientation) and shorter protective path where the conductor is subject to less bending (e.g., the 180-degree orientation).

Many conductors 132 will not stretch and/or experiencing tension can damage interconnections. Incorporating slack 212 (e.g., extra conductor length) in the conductors 132 at the orientations associated with relatively shorter orientation-specific protective pathways 206, can ensure that sufficient conductor length is available when the conductor experiences the longer orientation-specific protective pathways 206, such as at the closed orientation to avoid subjecting the conductors 132 to tension forces. Stated another way, conductor length can be selected based upon the longest pathway experienced by the conductors and slack may occur at shorter pathway lengths at other orientations.

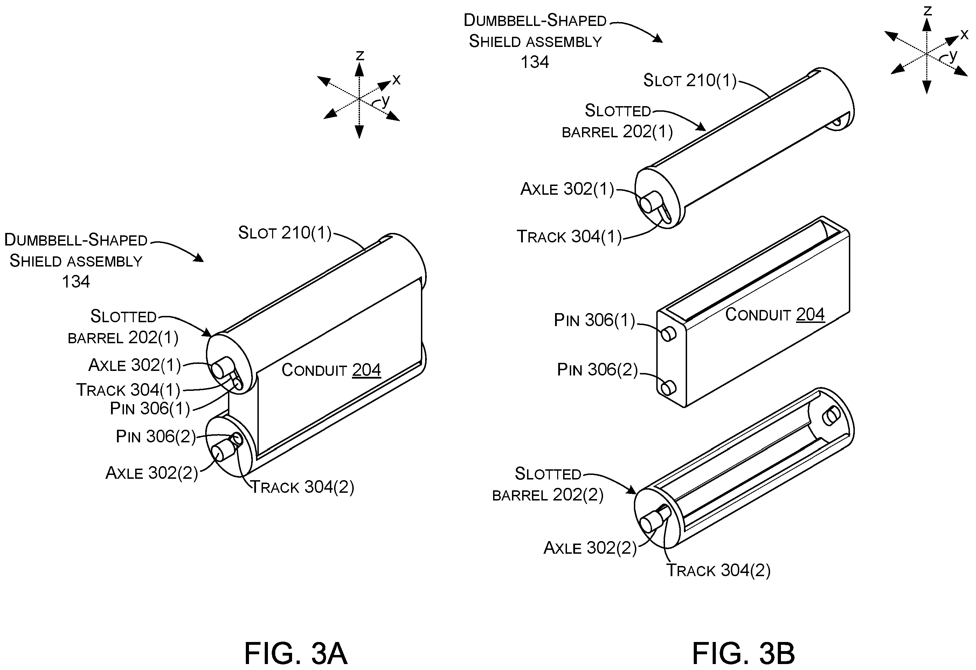

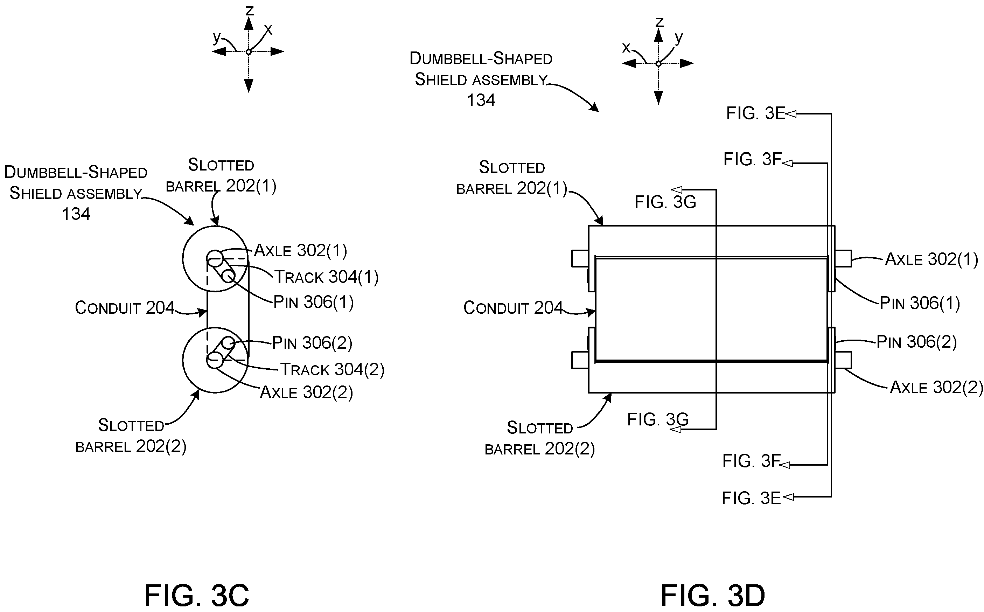

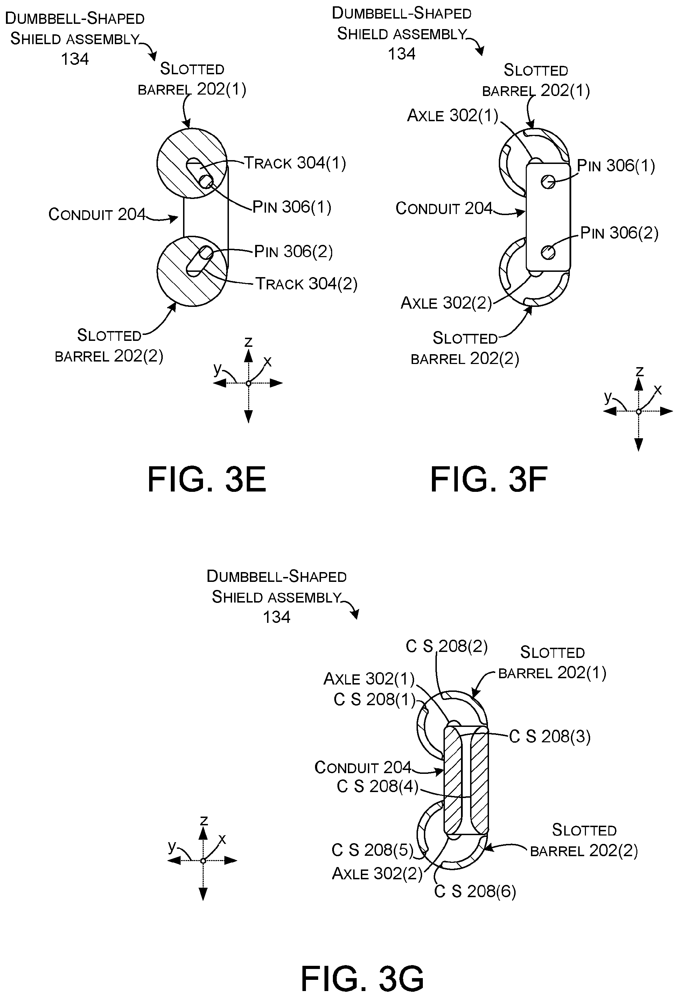

FIGS. 3A-3E collectively show aspects of the dumbbell-shaped shield assembly 134 in the closed or zero-degree orientation of FIGS. 1A and 2A. FIG. 3A shows dumbbell-shaped shield assembly 134 in isolation at the zero-degree orientation and FIG. 3B is a similar exploded view of the dumbbell-shaped shield assembly 134. FIG. 3C shows a (side) elevational view that is similar to FIG. 3A. FIG. 3D is a 'front' elevational view. FIGS. 3E-3G are sectional views as indicated in FIG. 3D. Note that the elements described below are only designated in FIGS. 3A and 3B on the end of the dumbbell-shaped shield assembly 134 facing the reader. Corresponding elements occur on the opposite end, but may not be visible in these views.

As can be seen in FIGS. 3A-3C, slotted barrel 202(1) can include a first axle 302(1). The first axle 302(1) can reside in the first portion housing 116 (FIG. 1C) and can be oriented parallel to the hinge axis HA1 of FIG. 1A. In some configurations, the first axle 302(1) can be coincident with the hinge axis (HA1). In other cases, the first axle can be parallel to, but offset from the hinge axis HA1. The first axle 302(1) can associate the slotted barrel 202(1) with the first portion housing so that the slotted barrel 202(1) can rotate relative to the first portion housing.

Similarly, slotted barrel 202(2) includes a second axle 302(2). The second axle 302(2) can reside in the second portion housing 118 (FIG. 1C) and can be oriented parallel to the hinge axis HA2 of FIG. 1A. In some configurations, the second axle 302(2) can be coincident with the hinge axis (HA2). In other cases, the second axle can be parallel to, but offset from the hinge axis HA2. The second axle 302(2) can associate the slotted barrel 202(2) with the second portion housing so that the slotted barrel 202(2) can rotate relative to the second portion housing.

Note that in an alternative configuration, the first portion housing could define opposing inwardly facing pins that reside in opposing outwardly facing dimples on the ends of the slotted barrel 202(1) and the second portion housing could define opposing inwardly facing pins that reside in opposing outwardly facing dimples on the ends of the slotted barrel 202(2). Still other configurations are contemplated.

The slotted barrels 202 can also define tracks 304. The tracks 304 can receive pins 306 defined by the conduit 204. The pins 306 can be retained in the tracks 304. The combination of the tracks 304 and the pins 306 can associate the conduit 204 with the slotted barrels 202 and allow movement/interaction that includes both relative rotation and translation between the conduit 204 and the slotted barrels 202. In this case, the tracks 304 are generally linear. An alternative non-linear track configuration is illustrated in FIG. 6.

Recall that FIGS. 3A-3G show the dumbbell-shaped shield assembly 134 in the zero-degree orientation where the dumbbell-shaped shield assembly 134 provides a relatively long orientation-specific protective pathway 206. FIG. 3C shows one aspect that contributes to the relatively long orientation-specific protective pathway. At this zero-degree orientation, the pins 306 are in the distal ends of the tracks 304 and the conduit 204 has moved to the right (e.g., in the +Y reference direction) relative to the slotted barrels 202. The extent of this relative movement is controlled by the length of the tracks 304. At this point, the pins 306 are at the ends of the tracks 304 and are prevented from moving farther. This relative movement has also rotated the slotted barrels 202 (on axles 302) so that the contact surfaces 208 of the slotted barrels 202 and the conduit 204 are oriented generally in a 'C' shape that collectively defines the minimum bend radius for the conductor as discussed relative to FIG. 2A.

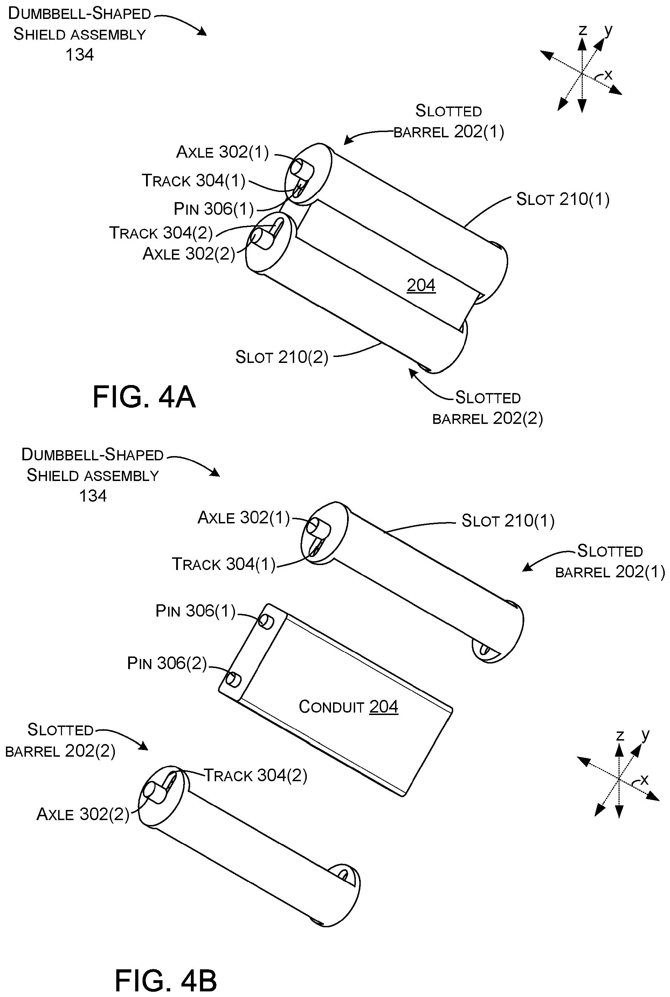

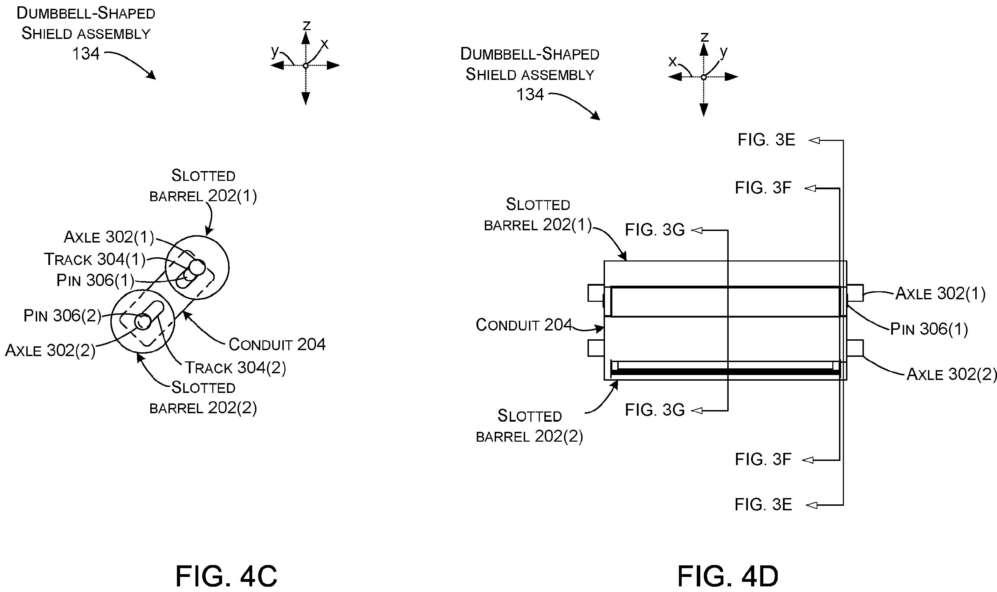

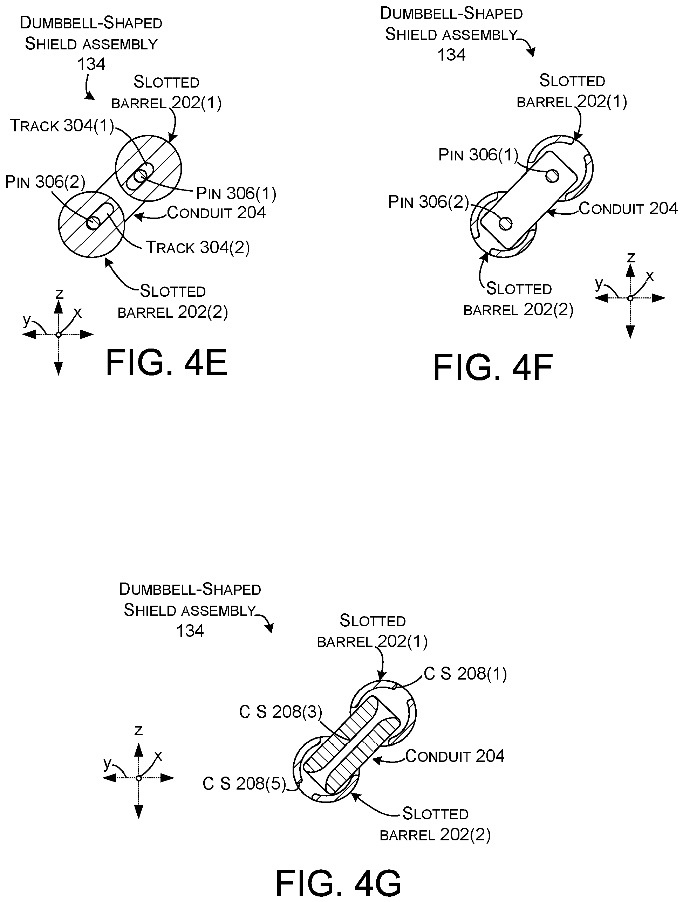

FIGS. 4A-4G show the dumbbell-shaped shield assembly 134 in the 90-degree orientation. At this point, as can be seen in FIG. 4C, pin 306(1) has moved halfway along track 304, and pin 306(2) has moved all the way from the distal end to the central end. Thus, the orientation-specific protective pathway 206 has shortened, such as by approximately a length of one-and-a-half track lengths compared to the zero-degree orientation of FIGS. 3A-3G. This aspect can be seen by comparing FIGS. 2A, 2B, and 2C. In the zero-degree orientation of FIG. 2A, the orientation-specific protective pathway 206 experienced by the conductor 132 is relatively long, so there is relatively little slack 212 in the conductor. In the 90-degree orientation of FIG. 2B, the orientation-specific protective pathway 206 experienced by the conductor 132 is slightly shorter, so more slack 212 occurs in the conductor. In the 180-degree orientation of FIG. 2C, the orientation-specific protective pathway 206 experienced by the conductor 132 is even shorter so there is even more slack 212 in the conductor.

Note that the present implementation is not confined in movement relative to the two slotted barrels 202. This aspect can be evidenced by pin 306(1) being at a different position in track 304(1) than pin 306(2) in track 304(2). At this point (e.g., at the 90-degree orientation), the slotted barrels 202 have rotated on their axles 302 so that the contact surfaces 208 (FIG. 4G) are aligned to create a generally linear and shorter orientation-specific protective pathway 206 for the conductor 132 (as indicated in FIG. 2B).

Thus, this implementation provides a technical solution of providing rigid components to protect the conductor 132 that can follow rotation associated with the hinge assemblies 106 without binding. The technical solution can allow the rotation and/or translation between the housings 116, 118, slotted barrels 202 and/or conduit 204 (e.g., the slotted barrels 202 can move relative to the housings 116 and 118 and the conduit 204 can move relative to the slotted barrels 202). This technical solution can allow the dumbbell-shaped shield assembly 134 to passively follow rotation of the housings 116 and/or 118 around the hinge axes defined by the hinge assembly while continually providing the orientation-specific protective pathway 206 to protect the conductor 132 (FIGS. 2A-2C).

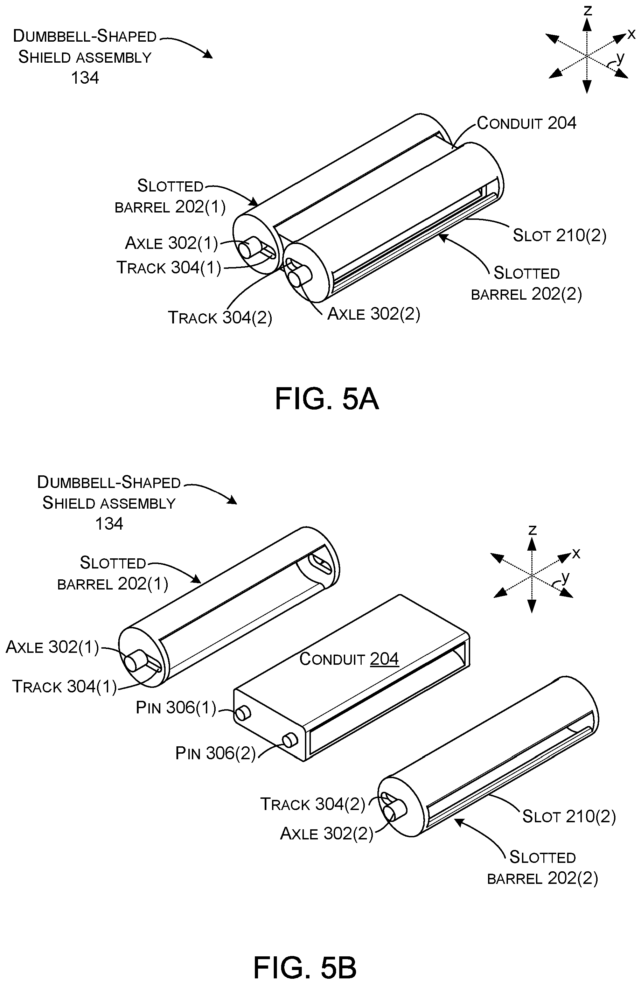

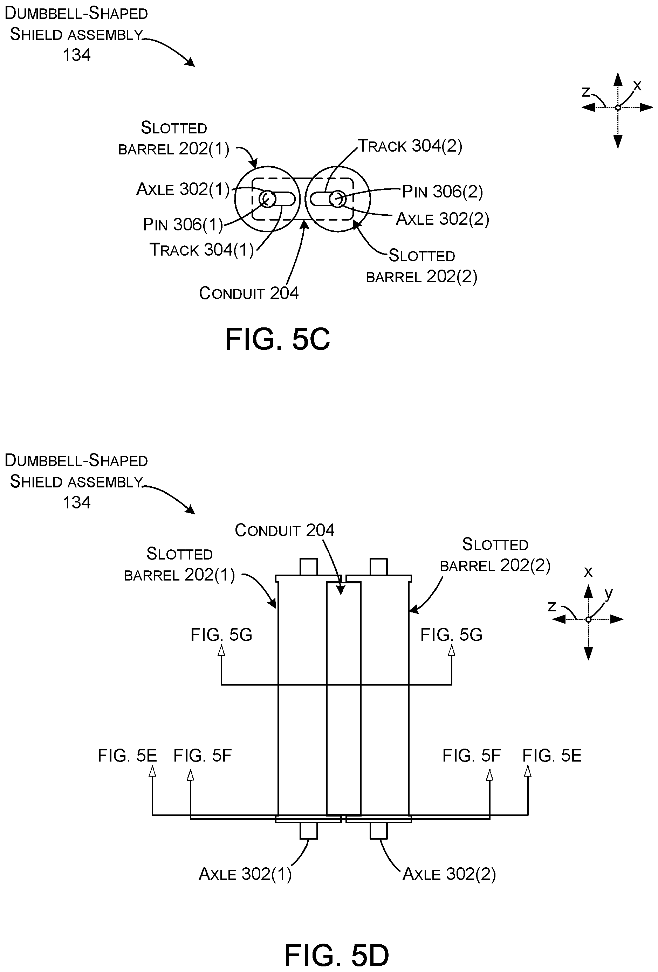

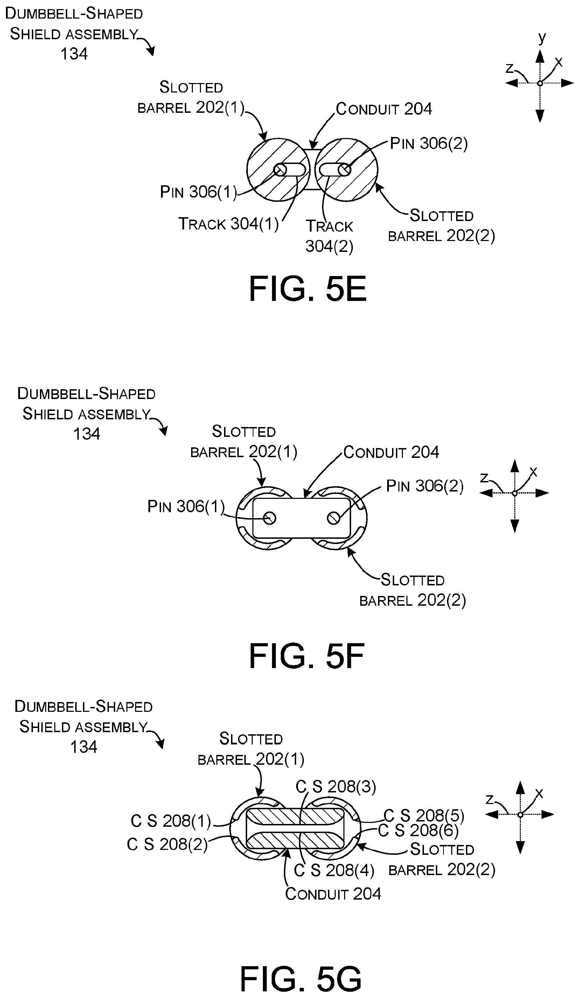

FIGS. 5A-5G show the dumbbell-shaped shield assembly 134 at the 180-degree orientation. At this point, the orientation-specific protective pathway 206 is at its shortest length. This aspect is evidenced with the conduit 204 linearly aligned between the slotted barrels 202. The pins 306 are at the central ends of the tracks 304 and thus the orientation-specific protective pathway 206 is shortened by at least the length of the tracks. This aspect can also be seen by comparing FIG. 2C to FIG. 2A. Note also that the contact surfaces 208 are linearly aligned on each side of the orientation-specific protective pathway 206 to maintain the conductor along the orientation-specific protective pathway 206.

The 'dumbbell shape' of the dumbbell-shaped shield assembly 134 is readily apparent in FIG. 5C. As used herein, 'dumbbell shape' and 'dumbbell shaped' means two relatively wider components with a relatively thinner component in between. Here, the wider components are the slotted barrels 202 and the narrow component is the conduit 204. The shapes of the components can vary from those shown here while still maintaining the relatively wide-narrow-wide ratios of a 'dumbbell shape'.

FIG. 6 shows another example device 100B that is manifest as a notebook computer. In this example, the tracks 304 can be defined by the conduit 204 and the pins 306 can be defined by the slotted barrels 202. Further, the tracks 304 have a non-linear shape to accommodate desired translation between the slotted barrels 202 and the conduit 204.

The present implementations can employ rigid bodies/components in the form of a conduit interposed between first and second slotted barrels. Relative movement can occur between the first slotted barrel and the first portion and the second slotted barrel and the second portion as well as between the conduit and the two slotted barrels. This relative movement allows rigid slotted barrels and conduits to be employed so that no components of the dumbbell-shaped shield assembly need to flex during the range of rotation. This configuration provides a technical solution of rotating and/or translating rigid bodies that collectively provide an orientation-specific protective pathway. This technical solution provides better reliability than flexing/flexible components which are more prone to failure through repeated rotation cycles.

Individual elements of the hinge assemblies and/or the dumbbell-shaped shield assembly can be made from various materials, such as metals, plastics, and/or composites. These materials can be prepared in various ways, such as in the form of sheet metals, die cast metals, machined metals, metal injection molding (MIM), 3D printed materials, molded or 3D printed plastics, and/or molded or 3D printed composites, among others, and/or any combination of these materials and/or preparations can be employed.

The present hinge assembly and shield assembly concepts can be utilized with any type of device, such as but not limited to notebook computers, smart phones, wearable smart devices, tablets, and/or other types of existing, developing, and/or yet to be developed devices.

Various methods of manufacture, assembly, and/or use for hinge assemblies, shield assemblies, and/or devices are contemplated beyond those shown above relative to FIGS. 1A-6.

Although techniques, methods, devices, systems, etc., pertaining to shield assemblies are described in language specific to structural features and/or methodological acts, it is to be understood that the subject matter defined in the appended claims is not limited to the specific features or acts described. Rather, the specific features and acts are disclosed as example forms of implementing the claimed methods, devices, systems, etc.

## Claims

1. A device (100), the device (100) comprising:
a first portion (102) including a first electronic component (128(1)) and a second portion (104) including a second electronic component (128(2));
a hinge assembly (106) rotatably securing the first and second portions (102, 104) through a range of rotation from a closed orientation to an open orientation;
a first slotted barrel (202(1)) associated with the first portion (102), the first barrel (202(1)) having a slot (210(1)) along its length, the slot (210(1)) being defined between contact surfaces (208) of the first barrel (202(1));
a second slotted barrel (202(2)) associated with the second portion (104), the second barrel (202(2)) having a slot (210(2)) along its length, the slot (210(2)) being defined between contact surfaces (208) of the second barrel (202(2)); and,
a conduit (204) including a first pin (306(1)) associated with the first slotted barrel (202(1)) to allow rotation of the first barrel (202(1)) relative to the conduit (204) and a second pin (306(2)) associated with the second slotted barrel (202(2)) to allow rotation of the second barrel (202(2)) relative to the conduit (204);
the conduit (204), the slot (210(1)) and contact surfaces (208) of the first barrel (202(1)), and the slot (210(2)) and contact surfaces (208) of the second barrel (202(2)) defining an orientation-specific protective pathway (206) between the first portion (102) and the second portion (104) for a conductor (132) which extends from the first electronic component (128(1)) through the slot (210(1)) and contact surfaces (208) of the first barrel (202(1)), through the conduit (204), and through the slot (210(2)) and contact surfaces (208) of the second barrel (202(2)) to the second electronic component (128(2)).

2. The device of claim 1, wherein the first slotted barrel (202(1)) is configured to rotate around a first axis (HA1) and the second slotted barrel (202(2)) is configured to rotate around a second axis (HA2).

3. The device of claim 2, wherein the first slotted barrel (202(1)) includes a first axle 302(1) that extends along the first axis (HA1) and that resides in the first portion (102) and the second slotted barrel (202(2)) includes a second axle (302(2)) that extends along the second axis (HA2) and that resides in the second portion (104).

4. The device of claim 1, wherein the first pin (306(1)) of the conduit (204) is retained in a first track (304(1)) defined by the first slotted barrel (202(1)) which allows both relative rotation and translation between the conduit (204) and the first barrel (202(1)), and the second pin (306(2)) of the conduit (204) is retained in a second track (304(2)) defined by the second slotted barrel (202(2)) which allows both relative rotation and translation between the conduit (204) and the second barrel (202(2)).

5. The device of claim 1, wherein the hinge assembly (106) defines a spine (115) between the first and second portions (102, 104).

6. The device of claim 5, wherein the orientation-specific protective pathway (206) completely encapsulates the conductor (132) through the spine (115) through the range of rotation.

## Patentansprüche

1. Vorrichtung (100), die Vorrichtung (100) umfassend:
einen ersten Abschnitt (102) mit einer ersten elektronischen Komponente (128(1)) und einen zweiten Abschnitt (104) mit einer zweiten elektronischen Komponente (128(2));
eine Scharnieranordnung (106), die den ersten und den zweiten Abschnitt (102, 104) drehbar in einem Drehbereich von einer geschlossenen Ausrichtung zu einer offenen Ausrichtung hält;
einen ersten geschlitzten Zylinder (202(1)), der dem ersten Abschnitt (102) zugeordnet ist, wobei der erste Zylinder (202(1)) entlang seiner Länge den Schlitz (210(1)) aufweist, der Schlitz (210(1)) zwischen den Kontaktflächen (208) des ersten Zylinders (202(1)) definiert ist;
einen zweiten geschlitzten Zylinder (202(2)), der dem zweiten Abschnitt (104) zugeordnet ist, wobei der zweite Zylinder (202(2)) entlang seiner Länge den Schlitz (210(2)) aufweist, der Schlitz (210(2)) zwischen den Kontaktflächen (208) des zweiten Zylinders (202(2)) definiert ist; und,
eine Leitung (204) mit einem ersten Stift (306(1)), der dem ersten geschlitzten Zylinder (202(1)) zugeordnet ist, um eine Drehung des ersten Zylinders (202(1)) relativ zur Leitung (204) zu ermöglichen, und einem zweiten Stift (306(2)), der dem zweiten geschlitzten Zylinder (202(2)) zugeordnet ist, um eine Drehung des zweiten Zylinders (202(2)) relativ zur Leitung (204) zu ermöglichen;
die Leitung (204), den Schlitz (210(1)) und die Kontaktflächen (208) des ersten Zylinders (202(1)) sowie den Schlitz (210(2)) und die Kontaktflächen (208) des zweiten Zylinders (202(2)), die einen ausrichtungsspezifischen Schutzweg (206) definieren zwischen dem ersten Abschnitt (102) und dem zweiten Abschnitt (104) für einen Leiter (132), der von der ersten elektronischen Komponente (128(1)) durch den Schlitz (210(1)) und die Kontaktflächen (208) des ersten Zylinders (202(1)), durch die Leitung (204) sowie durch den Schlitz (210(2)) und die Kontaktflächen (208) des zweiten Zylinders (202(2)) bis zur zweiten elektronischen Komponente (128(2)) verläuft.

2. Vorrichtung nach Anspruch 1, wobei der erste geschlitzte Zylinder (202(1)) konfiguriert ist, um sich um eine erste Achse (HA1) zu drehen, und der zweite geschlitzte Zylinder (202(2)) konfiguriert ist, um sich um eine zweite Achse (HA2) zu drehen.

3. Vorrichtung nach Anspruch 2, wobei der erste geschlitzte Zylinder (202(1)) eine erste Achse 302(1) einschließt, die sich entlang der ersten Achse (HA1) erstreckt und sich im ersten Abschnitt (102) befindet, und der zweite geschlitzte Zylinder (202(2)) eine zweite Achse (302(2)) einschließt, die sich entlang der zweiten Achse (HA2) erstreckt und sich im zweiten Abschnitt (104) befindet.

4. Vorrichtung nach Anspruch 1, wobei der erste Stift (306(1)) der Leitung (204) in einer ersten Führung (304(1)) gehalten wird, die durch den ersten geschlitzten Zylinder (202(1)) definiert ist und sowohl eine relative Drehung als auch eine Verschiebung zwischen der Leitung (204) und dem ersten Zylinder (202(1)) ermöglicht, und der zweite Stift (306(2)) der Leitung (204) in einer zweiten Führung (304(2)) gehalten wird, die durch den zweiten geschlitzten Zylinder (202(2)) definiert ist und sowohl eine relative Drehung als auch eine Verschiebung zwischen der Leitung (204) und dem zweiten Zylinder (202(2)) ermöglicht.

5. Vorrichtung nach Anspruch 1, wobei die Scharnieranordnung (106) zwischen dem ersten und dem zweiten Abschnitt (102, 104) einen Rücken (115) definiert.

6. Vorrichtung nach Anspruch 5, wobei der ausrichtungsspezifische Schutzweg (206) den Leiter (132) über die gesamte Bandbreite der Drehungen hinweg vollständig durch den Rücken (115) umschließt.

## Revendications

1. Dispositif (100), le dispositif (100) comprenant :
une première partie (102) comportant un premier composant électronique (128(1)) et une seconde partie (104) comportant un second composant électronique (128(2)) ;
un ensemble charnière (106) fixant de manière pivotante des première et seconde parties (102, 104) sur une plage de rotation allant d'une position fermée à une position ouverte ;
un premier cylindre fendu (202(1)) associé à la première partie (102), le premier cylindre (202(1)) ayant une fente (210(1)) sur toute sa longueur, la fente (210(1)) étant définie entre des surfaces de contact (208) du premier cylindre (202(1)) ;
un second cylindre fendu (202(2)) associé à la seconde partie (104), le second cylindre (202(2)) ayant une fente (210(2)) sur toute sa longueur, la fente (210(2)) étant définie entre des surfaces de contact (208) du second cylindre (202(2)) ; et,
un conduit (204) comportant une première broche (306(1)) associée au premier cylindre fendu (202(1)) pour permettre la rotation du premier cylindre (202(1)) par rapport au conduit (204) et une seconde broche (306(2)) associée au second cylindre fendu (202(2)) pour permettre la rotation du second cylindre (202(2)) par rapport au conduit (204) ;
le conduit (204), la fente (210(1)) et les surfaces de contact (208) du premier cylindre (202(1)), ainsi que la fente (210(2)) et les surfaces de contact (208) du second cylindre (202(2)), définissant un chemin de protection spécifique à l'orientation (206) entre la première partie (102) et la seconde partie (104) pour un conducteur (132) qui s'étend du premier composant électronique (128(1)) à travers la fente (210(1)) et des surfaces de contact (208) du premier cylindre (202(1)), à travers le conduit (204), puis à travers la fente (210(2)) et les surfaces de contact (208) du second cylindre (202(2)) jusqu'au second composant électronique (128(2)).

2. Dispositif selon la revendication 1, dans lequel le premier cylindre fendu (202(1)) est conçu pour tourner autour d'un premier axe (HA1) et le second cylindre fendu (202(2)) est conçu pour tourner autour d'un second axe (HA2).

3. Dispositif selon la revendication 2, dans lequel le premier cylindre fendu (202(1)) comporte un premier axe 302(1) qui s'étend le long du premier axe (HA1) et qui se trouve dans la première partie (102) et le second cylindre fendu (202(2)) comporte un second axe (302(2)) qui s'étend le long du second axe (HA2) et qui se trouve dans la seconde partie (104).

4. Dispositif selon la revendication 1, dans lequel la première broche (306(1)) du conduit (204) est maintenue dans une première glissière (304(1)) définie par le premier cylindre fendu (202(1)), ce qui permet à la fois une rotation et une translation relatives entre le conduit (204) et le premier cylindre (202(1)), et la seconde broche (306(2)) du conduit (204) est retenue dans une seconde glissière (304(2)) définie par le second cylindre fendu (202(2)), ce qui permet à la fois une rotation et une translation relatives entre le conduit (204) et le second cylindre (202(2)).

5. Dispositif selon la revendication 1, dans lequel l'ensemble charnière (106) définit une colonne vertébrale (115) entre les première et seconde parties (102, 104).

6. Dispositif selon la revendication 5, dans lequel le chemin de protection spécifique à l'orientation (206) encapsule entièrement le conducteur (132) à travers la colonne vertébrale (115) sur toute la plage de rotation.
